# EUROPEAN PATENT SPECIFICATION

(11) **EP 2 315 373 B1**
(45) Date of publication and mention of the grant of the patent: **07.10.2020**
(21) Application number: 09806883.6
(22) Date of filing: 14.08.2009
(51) Int. Cl.: H04W 12/10, H04W 12/00, H04L 29/06

(54) **NON-ACCESS STRATUM PROTOCOL OPERATION SUPPORTING METHOD IN A MOBILE TELECOMMUNICATION SYSTEM, AND THE SYSTEM THEREOF**
VERFAHREN ZUR UNTERSTÜTZUNG EINES NICHTZUGANGSSCHICHT-PROTOKOLLBETRIEBS IN EINEM MOBILTELEKOMMUNIKATIONSSYSTEM UND SYSTEM DAFÜR
PROCÉDÉ DE SUPPORT DE FONCTIONNEMENT DE PROTOCOLE NAS DANS UN SYSTÈME DE TÉLÉCOMMUNICATIONS MOBILES, ET SYSTÈME DE TÉLÉCOMMUNICATIONS MOBILES

(30) Priority: 15.08.2008 KR 20080080204
(43) Date of publication of application: 27.04.2011
(73) Proprietor: Samsung Electronics Co., Ltd., Suwon-si, Gyeonggi-do, 443-742 (KR)
(72) Inventor: SUH, Kyung Joo, Seoul 135-090 (KR); YEOUM, Tae Sun, Seoul 121-090 (KR); PARK, Joon Ho, Seongnam-si Gyeonggi-do 463-010 (KR); SEO, Jin Won, Suwon-si Gyeonggi-do 443-371 (KR); LEE, Sang Ho, Suwon-si Gyeonggi-do 443-373 (KR); JUNG, Jae Ho, Suwon-si Gyeonggi-do 443-470 (KR)
(74) Representative: Grünecker Patent- und Rechtsanwälte PartG mbB
(86) International application number: PCT/KR2009/004571
(87) International publication number: WO 2010/019021

(56) References cited:
- US-A1- 2005 215 253
- US-A1- 2007 140 491
- US-A1- 2007 165 595
- US-A1- 2007 184 825
- "3rd Generation Partnership Project; Technical Specification Group Core Network and Terminals; Non-Access-Stratum (NAS) protocol for Evolved Packet System (EPS); Stage 3 (Release 8)", 3GPP STANDARD; 3GPP TS 24.301, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V0.4.0, 1 July 2008 (2008-07-01), pages 1-141, XP050365230,
- ERICSSON: "CR to 24.801: NAS signalling security via E-UTRAN", 3GPP DRAFT; C1-072105-NAS-SECURITY, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. CT WG1, no. Vienna, Austria; 20070828, 28 August 2007 (2007-08-28), XP050026205, [retrieved on 2007-08-28]
- "3rd Generation Partnership Project; Technical Specification Group Core Network and Terminals; 3GPP System Architecture Evolution; CT WG1 Aspects (Release 8), 3GPP TR 24.801 V0.2.0", 3RD GENERATION PARTNERSHIP PROJECT (3GPP); TECHNICAL REPORT (TR), XX, XX , no. TR 24.801 V0.2.0 1 May 2007 (2007-05-01), pages 1-17, XP002520656, Retrieved from the Internet: URL:http://www.3gpp.org/ftp/Specs/archive/ 24_series/24.801/24801-020.zip [retrieved on 2009-03-26]
- MOTOROLA ET AL: "Pseudo-CR on 24.007 - defining EPS Imperative part of a standard L3 message", 3GPP DRAFT; C1-083141, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Budapest, Hungary; 20080811, 11 August 2008 (2008-08-11), XP050308375, [retrieved on 2008-08-11]
- SAMSUNG: "Pseudo-CR on 24.008- General message format and information elements coding", 3GPP DRAFT; C1-083265, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Budapest, Hungary; 20080811, 11 August 2008 (2008-08-11), XP050308484, [retrieved on 2008-08-11]

## Description

### BACKGROUND OF THE INVENTION

### 1. Field of the Invention:

The present invention relates to a mobile communication system and, in particular, to a method for managing mobility of a mobile terminal with Non-Access Stratum (NAS) protocols.

### 2. Description of the Related Art:

As one of the representative mobile communication standardization organizations, 3rd Generation Partnership Project (3GPP) has developed Evolved Packet System (EPS) and defined Mobility Management Entity (MME).

In order to meet the high speed mobility and reinforced security requirements of such a next generation mobile communication system, it has been proposed to improve the NAS protocol used in the conventional mobile communication systems, especially the 3G system of 3GPP.

However, the current NAS protocol is its early version yet and lacks definitions of the accurate properties for supporting the aforementioned functionalities. Actually, in the real system, the currently defined NAS protocol has malfunctioned and brought out unclear operation problems. There is therefore a need of the definition for NAS protocol that is capable of reinforcing security and managing mobility and session efficiently.

The publication of "3rd Generation Partnership Project; Technical Specification Group Core Network and Terminals; Non-Access-Stratum (NAS) protocol for Evolved Packet System (EPS); Stage 3 (Release 8)", 3GPP Standard; 3GPP TS 24.301, 3RD Generation Partnership Project (3gpp), Mobile Competence Centre; 650, Route Des Lucioles; F-06921 Sophia-Antipolis Cedex; France, no. V0.4.0, dated 1 July 2008, pages 1-141, refers in paragraph 4.4.2 to integrity protected signalling as mandatory for NAS messages once a valid NAS security context exists and the NAS security mode control proceedure has been successfully completed in the network and the UE. Integrity protection of all NAS signalling messages is the responsibility of the NAS layer. It is the network which activates integrity protection. Once integrity protection is activated, the receiving EMM or ESM entity in the UE shall not process any NAS signalling messages unless they have been successfully integrity checked by the NAS layer. If NAS signalling messages, having not successfully passed the integrity check, are received, then the NAS layer in the UE shall discard the message. If any NAS signalling message is received, as not integrity protected even though the integrity protection has been activated in the UE by the network, then the NAS layer shall discard this message. Within paragraph 9, titled General Message Format and Information Elements Coding, a disclosure is provided that within the protocols, every message, except the service requrest message, is a standard L3 message as defined in 3GPP TS 24.007[5]. This means that the message consists of the following parts: if the message is not security protected; protocol discriminator; EPS bearer identity; proceedure transaction identity; message type; and other information elements as required. If the message is security protected; protocol descriminator; security header type; message authentication code; sequence number; and not security protected NAS message. In paragraph 9.2, a disclosure is provided that the protocol discriminator, PD, and its use are defined in 3GPP TS 24.007[5].

MOTOROLA ET AL: "Pseudo-CR on 24.007 - defining EPS Imperative part of a standard L3 message", 3GPP DRAFT; CI-083141, 3RD GENERATION PARTNERSHIP PROJECT, 3GPP, MOBILE COMPETENCE CENTRE; 650, ROUTE DES LUCIOLES; F-06921 SOPHIA-ANTIPOLIS CEDEX; FRANCE, no. Budapest, Hungary; dated August 11, 2008 proposed required changes against 3GPP TS 24.007 in relation to the definition of the imperative part of a standard L3 message including protocol discriminators, skip indicator and transaction identifier for EPS. In EPS, the headed of a standard L3 message is composed of two or three octets and structured in three main parts, the protocol discriminator (1/2 octet), a security header type or a EPS bearer identity (1/2 octet), a message type octet 2 or octet 3 and one octet used in some cases as a protocol transaction identity, PTI, as octet 2 and shall proceed the message type if present. In addition, the standard L3 message may consist of a security header. Bits 5 to 8 of the first octet of an EPS standard L3 message may contain the security header type. All bits are set to 0 if the security header type is not used, and replaces the skip indicator in a standard L3 message in this case.

SAMSUNG: "Pseudo-CR on 24.008- General message format and information elements coding", 3GPP DRAFT; CI-083265, 3RD GENERATION PARTNERSHIP PROJECT, 3GPP, MOBILE COMPETENCE CENTRE; 650, ROUTE DES LUCIOLES; F-06921 SOPHIA-ANTIPOLIS CEDEX; FRANCE, no. Budapest, Hungary; dated August 11, 2008 proposed required changes related to 3GPP TS 24.008, especially general message format and information elements. Paragraph 10.3.6 refers to security header type and discloses that bits 5 to 8 of the first octet of EPS messages are security header type which is used for distinguishing whether security such as NAS integrity protection or NAS ciphering protection is used or not. The security header type encoded as "0000" is used for no security protected NAS messages.

### SUMMARY OF THE INVENTION

It is the object of the present invention to provide an improved method and entity for processing a message in a wireless communication network.

This object is solved by the subject matter of the independent claims.

Preferred embodiments are defined by the dependent claims.

In order to solve the problems of the prior arts, the present invention provides a method and an apparatus for supporting security, mobility, and session management of a mobile terminal in the evolved mobile communication system supporting NAS protocol such as 3GPP EPS. Also, the present invention provides a method for supporting mobility and session management of the mobile terminal that is capable of managing mobility and session of the mobile terminal between the 3GPP EPS and other radio access technology network by defining new NAS messages between the mobile terminal and a mobility management entity.

Also, the present invention provides a method and system an appratus for managing mobility using Non-Access Stratum (NAS) in a mobile communication system including the mobile terminal (hereinafter, interchangeably referred to User Equipment (UE)) and Mobility Management Entity (MME) and processes the secure NAS messages and non-secure NAS messages distinctively and the mobility management message and EPS Mobility Management (EMM) and Evolved Session Management (ESM) message as session management message, resulting in improving mobility and session management efficiency.

In accordance with an aspect of the present invention, a method for processing a NAS protocol message in a mobile communication includes receiving a NAS protocol message having a protocol discriminator configured at a least significant part of a first octet, a protocol discriminator extension configured at a most significant part of the first octet, and a security header type configured at a least significant part of a second octet; analyzing the protocol discriminator of the message; and processing, when the protocol discriminator is a protocol discriminator extension indicator, the message based on data of the protocol discriminator extension.

Preferably, the protocol discriminator includes data for discriminating among an ESM message, an EMM message, and the protocol discriminator extension; and the protocol discriminator extension comprises data for discriminating between an integrity protected EPS message and an integrity and ciphering protected EPS message. Preferably, the protocol discriminator extension includes data for discriminating among an integrity protected EMM message, an integrity and ciphering protected EMM message, an integrity protected ESM message, and an integrity and ciphering protected ESM message. Preferably, the method further includes analyzing, when the protocol discriminator indicators the EMM message, the security header type; and discriminating, on the basis of the security header type, among the integrity protected EMM message, the integrity and ciphering protected EMM message, and a service request message.

In accordance with another aspect of the present invention, a mobile communication system includes terminals located within a cell as a service coverage of a base station; and a mobility management entity which manages mobility of the terminals using NAS protocol messages in connection with the terminals via the base stations, wherein the NAS protocol message comprises a protocol discriminator for discriminating ESM message, EMM message, and protocol discriminator extension indicator; a protocol discriminator extension for discriminating among protection types of EMM and ESM messages; a security header type indicating whether the message is protected; a Message Authentication Code (MAC) for integrity authentication of the message; and a sequence number.

Preferably, the protocol discriminator is configured at a least significant part of a first octet, the protocol discriminator extension is configured at a most significant part of the first octet, and the security header type is configured at a least significant part of a second octet. Preferably, the protocol discriminator extension comprises data for discriminating between an integrity protected EPS message and an integrity and ciphering protected EPS message. Preferably, the mobile communication system of claim 2, wherein the protocol discriminator extension comprises data for discriminating among an integrity protected EMM message, an integrity and ciphering protected EMM message, an integrity protected ESM message, and an integrity and ciphering protected ESM message.

### Advantageous effects

In the above described present invention, the advantageous effects achieved by the representative embodiments of disclosed invention are as follows.

The present invention relates to a method and system for managing mobility of a UE using the Non-Access Stratum (NAS) protocols in a mobile communication network, and the method for managing the mobility according to the present invention includes User Equipments (UEs) and a Mobility Management Entity (MME) and is advantageous to manage the mobility of the UE and session by efficiently discriminating between the security protected NAS message and plain NAS message and also efficiently discriminating among the EPS Mobility management (EMM) messages and the Evolved Session Management (ESM) messages.

### BRIEF DESCRIPTION OF THE DRAWINGS

FIG. 1 is a schematic diagram illustrating a mobile communication system having functional entities according to an embodiment of the present invention;
FIGs. 2 to 4 are a flowchart illustrating a procedure for managing NAS protocols between the UE and the MME according to an embodiment of the present invention;
FIG. 5 is a flowchart illustrating a procedure for a procedure for managing NAS protocols between the UE and the MME according to another embodiment of the present invention;
FIG. 6 is a flowchart illustrating a procedure for a procedure for managing NAS protocols between the UE and the MME according to another embodiment of the present invention; and
FIG. 7 is a flowchart illustrating a procedure for a procedure for managing NAS protocols between the UE and the MME according to still another embodiment of the present invention.

### DETAILED DESCRIPTION OF EXEMPLARY EMBODIMENTS

Exemplary embodiments of the present invention are described with reference to the accompanying drawings in detail. The same reference numbers are used throughout the drawings to refer to the same or like parts. Detailed description of well-known functions and structures incorporated herein may be omitted to avoid obscuring the subject matter of the present invention. The following terms are defined in consideration of functions in the present invention, and the meanings thereof may vary according to the intention of a user or an operator or according to usual practice. Therefore, the definitions of the terms must be interpreted based on the entire content of the present specification.

In the following description, the present invention provides a method for managing security, mobility, and session between the UE and MME using NAS protocol in a mobile communication system. Although the description is directed to the 3GPP EPS system, the present invention can be applied to other mobile communication systems using NAS.

The method for supporting security, mobility, and session management with NAS protocol can be applied to other types of mobile communication system having similar technical background and channel formats without departing from the sprit and scope of the present invention, and this is obvious to those skilled in the art.

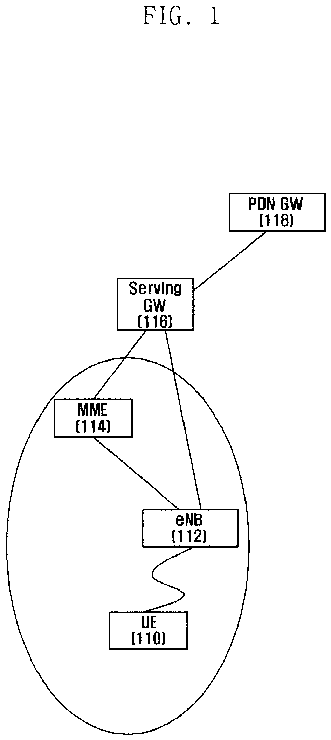

FIG. 1 is a schematic diagram illustrating a mobile communication system having functional entities according to an embodiment of the present invention. In this embodiment, the description is directed to the configuration of 3GPP EPS.

Referring to FIG. 1, an evolved Node B (hereinafter, interchangeably called E Node B or eNB) 112 establishes a radio connection with the User Equipment (UE) 110 for communication within the cell as its service coverage. The UE 110 is a terminal connects to a packet data network such as Internet via Serving Gateway (hereinafter, interchangeably called Serving GW or SGW) 116. In the present invention, a Packet Data Network Gateway (hereinafter, interchangeably called PDN G W) 118, as an important network entity of the packet data network, acts the role of a Home Agent (HA).

In the present invention, the description is directed to the NAS protocol as the protocol between the MME 114, which is introduced for mobility and session management, and the UE 110. That is, the NAS protocol adopted for the mobility management between the UE 110 and the MME 114 in the conventional 3GPP system has been evolved to reinforce the security in EPS and is being evolved to support the features that are newly introduced for efficient data communication in EPS. In an embodiment of the present invention, normal message types are defined in detail for efficient operations of the NAS protocol.

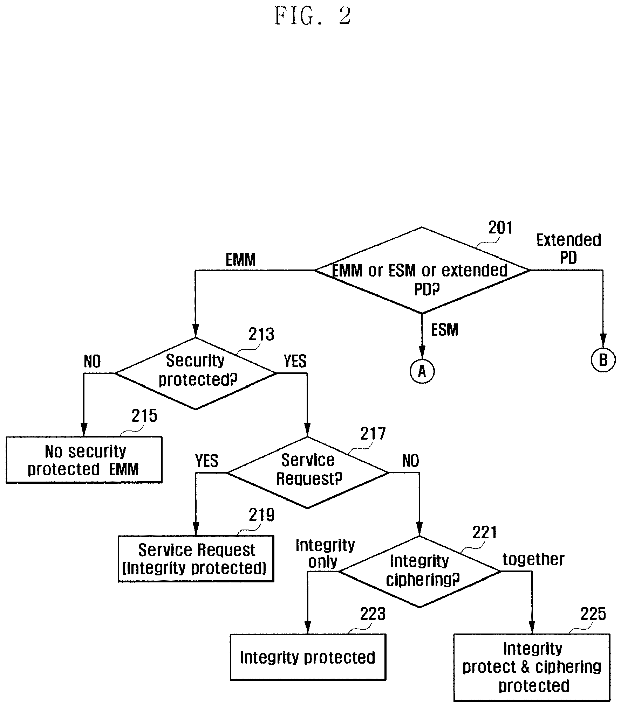

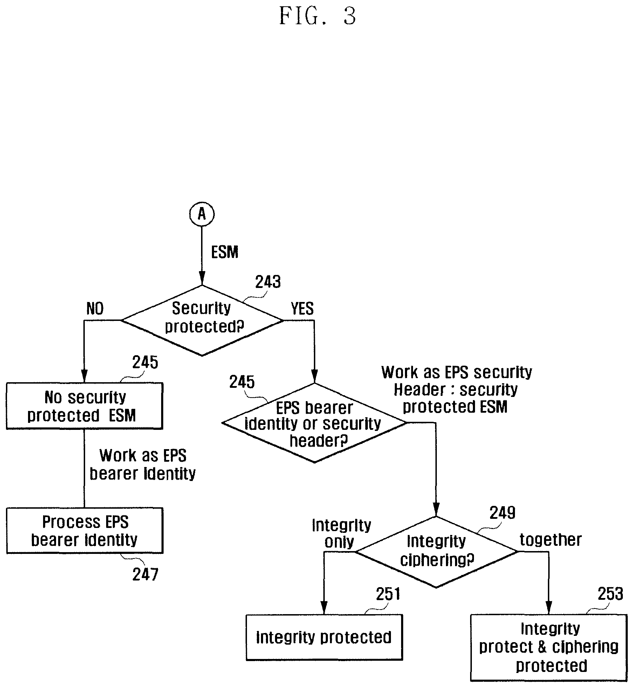

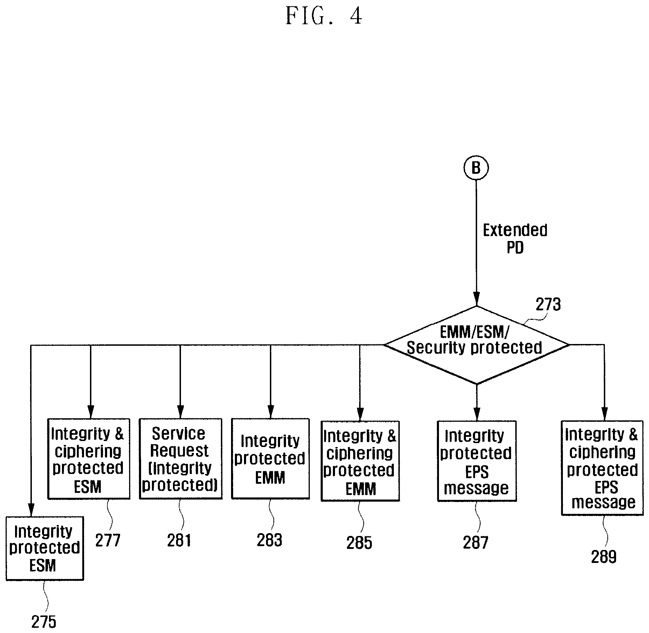

The procedures depicted in FIGs. 2 to 7 can be performed in the UE 110 and the MME 114. In an embodiment of the present invention, the description is made in view of the MME 114 and the operations of the MME 114 can be performed by the UE 110.

FIGs. 2 to 4 are a flowchart illustrating a procedure for the UE 110 and the MME 114 to generate and interpret the header of a NAS protocol message according to an embodiment of the present invention.

Referring to FIGs. 2 to 4, the current NAS protocol includes security protected NAS messages and plain NAS messages and support Evolved Mobility Management (EMM) and Evolved Session Management (ESM).

First of all, the MME 114 checks the protocol discriminator to discriminate the NAS protocols and performs the management function of the NAS protocol (201). That is, the MME 114 analyzes a message and performs one of EMM and ESM according to the analysis result or generates a message using a protocol discriminator extension (PDE) or EMM or ESM message for discriminate the security header. In an embodiment of the present invention, available combinations are defined, and at least one of the combinations can be taken. That is, the NAS protocol messages can be categorized into two types: the message which does not use the protocol discriminator extension as shown in table 2 and the message which uses the protocol discriminator extension as shown in table 3. In an embodiment of the present invention, the description is directed to the case where the protocol discriminator extension is used.

In the EMM message discrimination method, the MME 114 determines whether the EMM message is a security protected MME message, by referencing the security header (213). If it is determined that the EMM message is a plain EMM message, the MME 114 generates a plain EMM message which is not security-protected (215). Among the security protected EMM message, the SERVICE REQUEST message is the message which is transmitted first for recovery of a radio channel breakage. Accordingly, if it is determined that the EMM message is a security protected message, the MME determines whether the security protected MME message is the service request message (217). If the security protected MME message is the service request message, the MME 114 defines a separate message (219). The service request message is an integrity protected message. Otherwise, if the security protected MME message is not the service request message at step 217, the MME 114 determines whether the message is an integrity-only protected message or integrity plus ciphering protected message (221). If the message is the integrity-only protected message, the MME 114 generates an integrity protected message (223). Otherwise, if the message is the integrity plus ciphering protected message, the MME 114 generates an integrity plus ciphering protected message (225).

Retuning to step 201, if the message is an ESM message, the MME 114 determines whether the ESM message is security protected ESM message (243). If the ESM message is not security protected ESM message, the MME 114 generates a plain ESM message (245) and processes EPS bearer identity (247). That is, the MME configures the 5^{th}, 6^{th}, 7^{th}, and 8^{th} bits of octet 1 so as to be used as EPS bearer identity or security header to discriminate bearers for session management.

In case that the ESM message is a security protected ESM message, there two message check modes: one is EPS bearer identity check mode and the other is security header check mode. In the following, only one mode is described. If the ESM message is a security protected ESM message, the MME 114 can use the EPS bearer identity or the security header (4 most significant bits of octet 1 in case of the message as shown in table 2 and 4 least significant bits of octet 1 in case of the message as shown in table 3). In the following, the description is made under the assumption of the NAS protocol message structure of table 3. That is, the MME 114 uses the security header but not the EPS bearer entity. In this case, the MME 114 determines whether to configure the message to support only the integrity or both the integrity and ciphering (249). Here, the MME 114 can configure the ESM message supporting only the integrity protection by recognizing the 4 least significant bits (1^{st}, 2^{nd}, 3^{rd}, and 4^{th} bits) of octet 2 as the security header (251) or configure the ESM message supporting both the integrity and ciphering protection by recognizing the 4 least significant bits (1^{st}, 2^{nd}, 3^{rd}, and 4^{th} bits) of octet 2 as the security header (253).

Meanwhile, the MME 114 can use the protocol discriminator extension (extended PD) for discriminating among the ESM, EMM, and security protection. Accordingly, if the extended PD is detected at step 201, the MME 114 checks the protocol discriminator and protocol discriminator extension (273) and discriminates the messages (275, 277, 281, 283, 285, 287, and 289). That is, the MME 114 configures the protocol discriminator of 1^{st}, 2^{nd}, 3^{rd}, and 4^{th} bits of octet 1 to indicate the use of the protocol discriminator extension and discriminates among the integrity protected ESM message at step 275, integrity and ciphering protected ESM message at step 277, and plain ESM message at step 289 by using the 5^{th}, 6^{th}, 7^{th}, 8^{th} bits of the octet 1.

In case of the EMM message, the MME can use the protocol discriminator extension at step 273 to discriminate among the service request message at step 281, the integrity protection EMM message at step 283, the integrity and ciphering protected EMM message at step 285, and the plain EMM message at step 287 by configuring the protocol discriminator of the 1^{st}, 2^{nd}, 3^{rd}, and 4^{th} bits of octet 1 to indicate the use of protocol discriminator extension and using the 5^{th}, 6^{th}, 7^{th}, 8^{th} bits of the octet 1 as the protocol discriminator extension.

The MME 114 also can discriminate among the integrity protected EPS message at step 287 and the integrity and ciphering protected EPS message at step 289 without discriminating between the EMM and ESM messages.

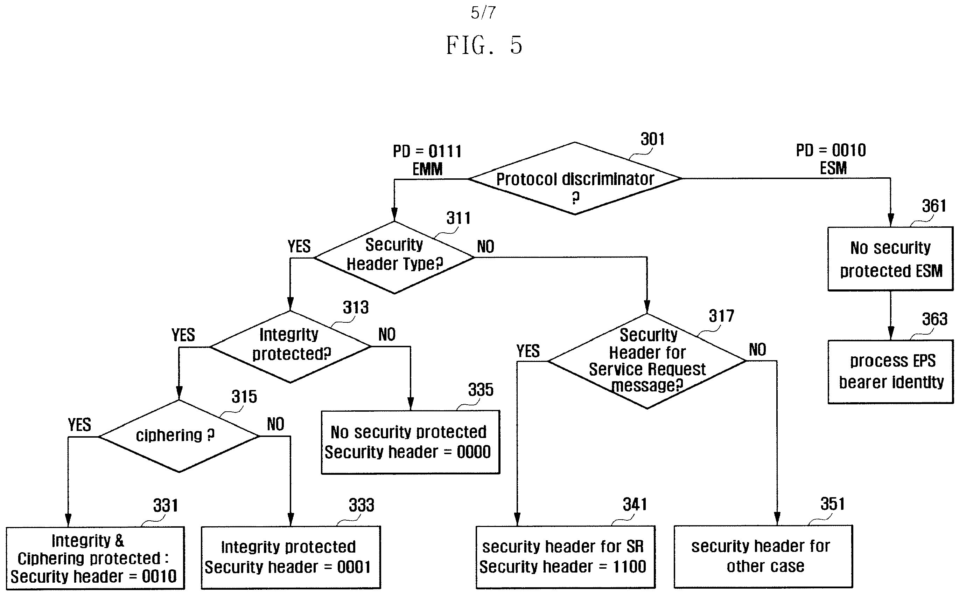

Descriptions are made of the procedures for generating and interpreting NAS protocol message header at the UE 110 and MME 114 with reference to FIGs. 5 to 7 according to an embodiment of the present invention.

FIG. 5 is a flowchart illustrating a procedure for generating/interpreting a NAS protocol message header at the UE 110 and MME 114 according to an embodiment of the present invention. In this embodiment, the protocol discriminator (PD) of a security protected NAS message is used for the security protection in the EMM environment.

Referring to FIG. 5, the MME 114 checks the PD to determine whether the message is an EMM message or an ESM message (301). Here, the PD is set to 0111 for indicating EMM message or 1101 for indicating ESM message. If it is determined that the message is the EMM message (i.e. PD=0111) at step 310, the MME 114 determines whether the message header is the security header type (311). The MME 114 can discriminate among the security headers for integrity, protection, no protection, service request message based on the security header type indicated by the 5^{th}, 6^{th}, 7^{th}, and 8^{th} bits of octet 1. If the message header is the security header type, the MME 114 determines whether the integrity is protected (313) and, if so, whether ciphering is protected (315). If the integrity and ciphering are protected, the MME 114 sets the security header type to 0010 or interprets 0010 correspondingly (331). Otherwise, if the only the integrity is protected, the MME 114 sets the security header type to 0001 to protect the integrity but not ciphering (333). If it is determined that the integrity is not protected at step 313, the MME 114 sets the security header type to 0000 indicate plain EMM message.

Meanwhile, the MME 114 can define the security header type for the service request message and, in this case, the security header type is set to 1100. The MME 114 determines whether the security header is of the service request message (317) and, if so, sets the security header type to 1100 or interprets the security header type correspondingly. Accordingly, the MME 114 can process the message required to be processed immediately such as the service request message. It is determined that the message header is not the security header type at step 317 or the header type is not security header type at step 211, the MME 114 processes the security header corresponding to a predetermined rule (351). Detailed description on the security header processing step 351 for other cases is omitted herein.

The procedure of FIG. 5 is described in more detail with reference to tables 2, 4, 7 and 8 later.

In case of ESM message, the protocol discriminator can be set to 0010 (P=0010). Accordingly, if PD=0010 at step 301, the MME 114 regards that the message as a plain ESM message not protected (361) and processes with EPS bearer identity (363).

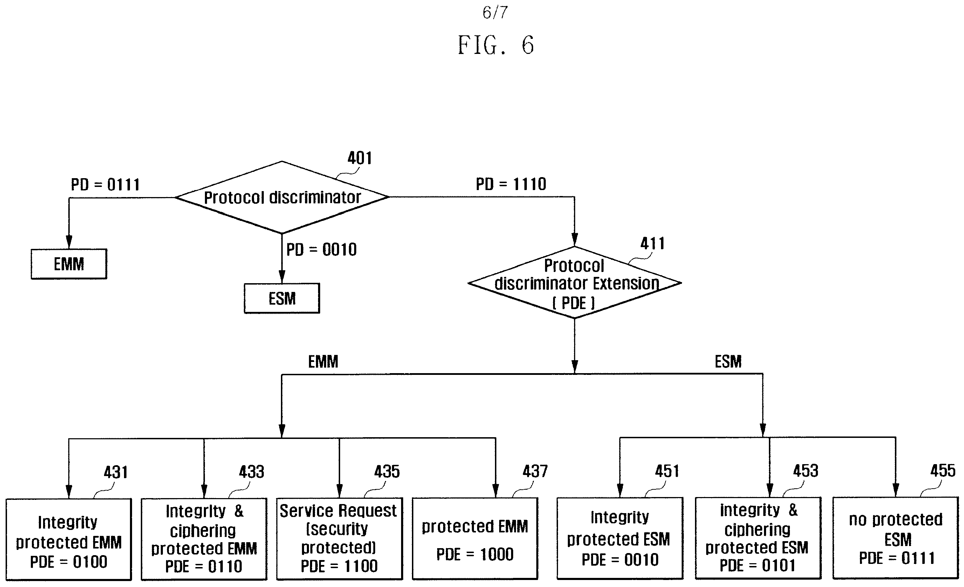

FIG. 6 is a flowchart illustrating a procedure for generating and interpreting a NAS protocol message header at the UE 110 and MME 114 according to another embodiment of the present invention. In this embodiment, the security protected NAS messages are discriminated by the protocol discriminator extension (PDE).

Referring to FIG. 6, the MME 114 checks the protocol discriminator (PD) to discriminate among the EMM, ESM, and protocol discriminator extension modes (401). If the PD is set to 0111, the message is processed as an EMM message (403). If the PD is set to 0010, the message is processed as an ESM message (405). If the PD is set to 1110, this means the protocol discriminator extension mode (407).

If the protocol discriminator extension is detected at step 407, the MME 114 checks the protocol discriminator extension (PDE) to discriminate between EMM and ESM messages, and the EMM or ESM message is integrity protected, ciphering protected, service request message, and/or plain message (411). That is, PDE=0100 means the integrity protected EMM message (431), PDE=0110 means the integrity and ciphering protected EMM message (433), PDE=1100 means the service request message (435), PDE=1000 means the plain EMM message; and the MME or UE can interpret and set the PDE. Meanwhile, PDE=0010 means the integrity protected ESM message (451), PDE=0101 means the integrity and ciphering protected ESM message (453), and PDE=0111 means the plain ESM message (455); and the MME or UE can interpret and set the PDE.

The procedure of FIG. 6 is described in more detail with reference to tables 3, 4, and 6 later.

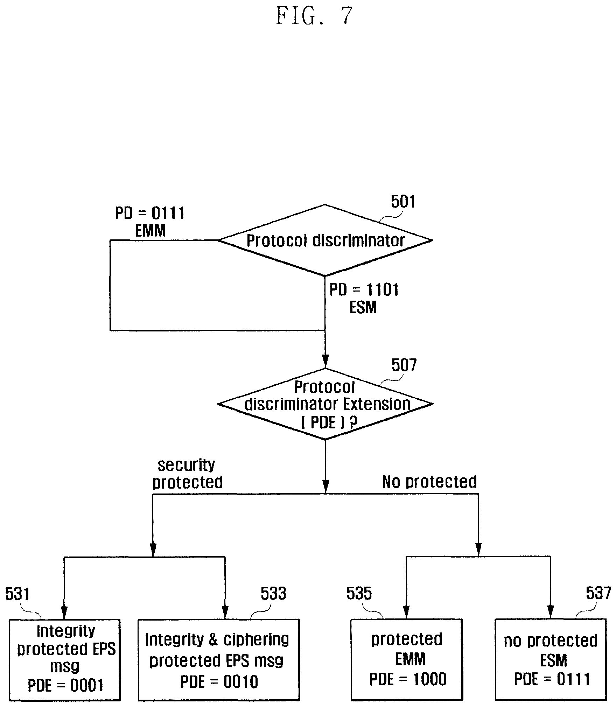

FIG. 7 is a flowchart illustrating a procedure for generating and interpreting a NAS protocol message header at the UE 110 and MME 114 according to an embodiment of the present invention. In this embodiment, the security protected NAS messages are discriminated by the protocol discriminator extension (PDE).

Referring to FIG. 7, the MME 114 checks the protocol discriminator (PD) (501) and, if PD=0111, interprets the message to the EMM message (503) and, if PD=0010, interprets the message to the ESM message (505). Next, the MME 114 reads the PDE to determine whether the message is protected or not (507). If it is determined that the message is protected, the MME 114 checks the PDE to discriminate between the integrity protected EPS message and the integrity and ciphering protected EPS message. If PDE=0001, the message is identified as the integrity protected EPS message (531); and if PDE=0010, the message is identified as the integrity and ciphering protected message (533). If it is determined that the message in on protected, the MME 114 checks whether the PDE to discriminate between the unprotected EMM message and unprotected ESM message. If PDE=1000, the message is identified as the unprotected EMM message (535); and if PDE=0111, the message is identified as the unprotected ESM message (537).

The procedure of FIG. 7 is described in more detail with reference to tables 3, 4, and 6 later.

The message configuration method explained with reference to FIGs. 2 to 4 is described in more detail hereinafter. The unprotected NAS message is formatted as following table 1:

**Table 1**

| 8 | 7 | 6 | 5 | 4 | 3 | 2 | 1 | |
|---|---|---|---|---|---|---|---|---|
| EPS bearer Identity Or Security header type | | | | Protocol discriminator | | | | Octet 1 |
| Procedure transaction identifier | | | | | | | | octet 1a' |
| | | | | | | | | Octet 2 |
| Message type | | | | | | | | Octet 3 |
| Other information elements as required | | | | | | | | Octet n |

### Message 1: unprotected NAS message

The current unprotected NAS message includes a protocol discriminator (PD) occupying 4 bits (the 1^{st}, 2^{nd}, 3^{rd}, and 4^{th} bits) of octet 1 and EPS bearer identity or security header type occupying 4 bits (the 5^{th}, 6^{th}, 7^{th}, and 8^{th} bits) of octet 1 as shown in table 1. When the EPS bearer identity is used, one octet (i.e., octet 1a*) is added as a procedure transaction identifier which is used for activation, modification, and deactivation of the bearer. The unprotected NAS message also includes a message type field for indicating the message type of each message. Table 2 shows a format of the current security protected NAS message.

**Table 2**

| 8 | 7 | 6 | 5 | 4 | 3 | 2 | 1 | |
|---|---|---|---|---|---|---|---|---|
| Security header type | | | | Protocol discriminator | | | | Octet 1 |
| Message authentication code | | | | | | | | Octet 2 |
| | | | | | | | | |
| | | | | | | | | Octet 5 |
| Sequence # | | | | | | | | Octet 6 |
| NAS message | | | | | | | | Octet 7 |
| | | | | | | | | |
| | | | | | | | | Octet n |

### Message 2: security protected NAS message

The security protected NAS message includes a protocol discriminator occupying 4 bits (the 1^{st}, 2^{nd}, 3^{rd}, and 4^{th} bits) of octet 1 and security header type occupying the rest 4 bits (the 5^{th}, 6^{th}, 7^{th}, and 8^{th} bits) of octet 1. The security protected NAS message also includes a message authentication code occupying octets 3 to 5, a sequence number occupying octet 6, and a NAS message occupying octets 7 to n. In this format, since the protocol discriminator is limited in value, it is required to modify the format of the NAS message or use a value of other field.

In an embodiment of the preset invention, a message format as shown in table 3 is proposed to discriminate between the protocols efficiently. Another approach is to define parameters for discriminating between the protocols while using table 2.

Table 3 shows a format of the security protected message using the protocol discriminator extension proposed in an embodiment of the present invention.

In case of the security protected NAS message formatted as shown in table 3, the 4 bits (the 1^{st}, 2^{nd}, 3^{rd}, and 4^{th} bits) of octet 1 which is occupied by the protocol discriminator are used as the indicator for indicating the existence of the protocol discriminator extension such that the NAS messages are discriminated by the protocol discriminator extension occupying the 5^{th}, 6^{th}, 7^{th}, and 8^{th} bits of octet 1. The 1^{st}, 2^{nd}, 3^{rd}, and 4^{th} bits of octet 2 can be used for the security header type. Accordingly, 4 bits of the message authentication code (MAC) for the integrity validation can be added or shifted forward as much as 4 bits. The sequence number field and NAS message field are arranged at the same positions as the format of table 2.

**Table 3**

| 8 | 7 | 6 | 5 | 4 | 3 | 2 | 1 | |
|---|---|---|---|---|---|---|---|---|
| Protocol discriminator extension | | | | Protocol discriminator | | | | Octet 1 |
| MAC | | | | Security header type | | | | Octet 2 |
| Message authentication code (MAC) | | | | | | | | |
| | | | | | | | | Octet 6 |
| Sequence # | | | | | | | | Octet 7 |
| NAS message | | | | | | | | Octet 8 |
| | | | | | | | | |
| | | | | | | | | Octet n |

### Message 3: security protected NAS message according to an embodiment

When using the message format of table 3, the protocol discriminator is used as shown in table 4:

**Table 4**

| PD | | | | Message |
|---|---|---|---|---|
| 4 | 3 | 2 | 1 | |
| 0 | 0 | 1 | 0 | ESM message |
| 0 | 1 | 1 | 1 | EMM message |
| 1 | 1 | 1 | 0 | PDE indicator |

### Message 4: PD value when PDE is used

As shown in table 4, the value 0010 of the 1^{st}, 2^{nd}, 3^{rd}, and 4^{th} bits of octet 1 means the ESM message, 0111 means the EMM message, and 1110 is the PDE indicator which the use of the PDE for protocol discrimination.

When the PDE is not used, the PE is used as shown in table 5

**Table 5**

| PD | | | | Message |
|---|---|---|---|---|
| 4 | 3 | 2 | 1 | |
| 0 | 0 | 1 | 0 | ESM message |
| 0 | 1 | 1 | 1 | EMM message |

### Message 5: PD value when PDE is not used

In case of using protocol discriminator extension (PDE), the NAS protocols can be discriminated with various methods, and one of the available methods is described with reference table 6. Accordingly, allocating the value can be combined with various methods, and the present invention has the meaning in the modification available range. That is, it is possible to discriminate between the integrity protected EPS message and the integrity and ciphering protected EPS message or between the integrity protected EPS message and the integrity and ciphering protected EPS message per EMM or ESM message. In view of the bit usage efficiency and bit reservation for future use, it is efficiency to use the discrimination between the integrity protected EPS message and the integrity and ciphering protected EPS message or discriminating the integrity and ciphering protected EPS message as the security protected message. In an embodiment of the present invention, it is possible to discriminating the protected service request message and unprotected service request message.

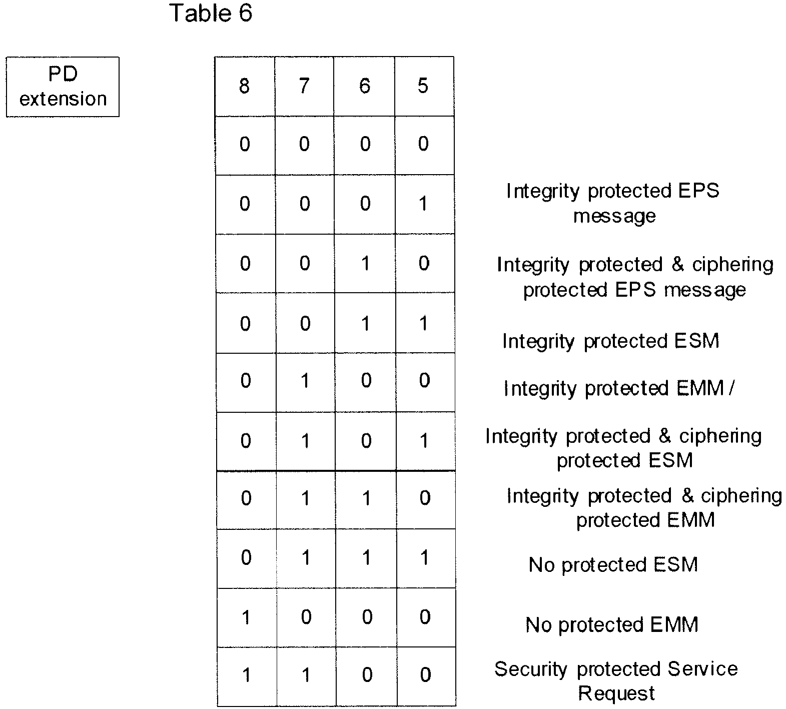

### Message 6: values of PDE and description of the values according to an embodiment

In case of the EMM message without using protocol discrimination extension, the security header type field of the message can be configured as shown in table 7 or table 8.

Table 7 defines the security header types for EMM message. In table 7, 0000 indicates the plain NAS, 0001 indicates the security protected EMM, 1100 indicates the service request message, and 1101 to 1111 are reserved for the future extension of the service request message. Other bits are reserved for the future use.

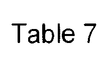

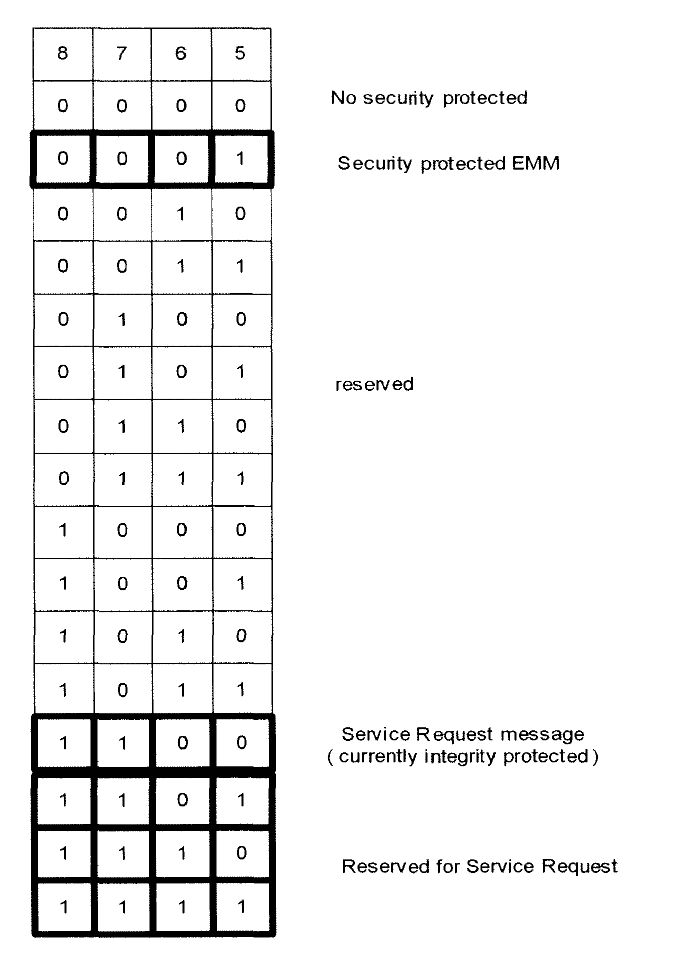

### Message 7: security header for EMM message in an embodiment

The security header type field can be modified as shown in table 8. That is, it can be discriminated whether the EMM message is only integrity protected or both the integrity and ciphering protected.

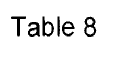

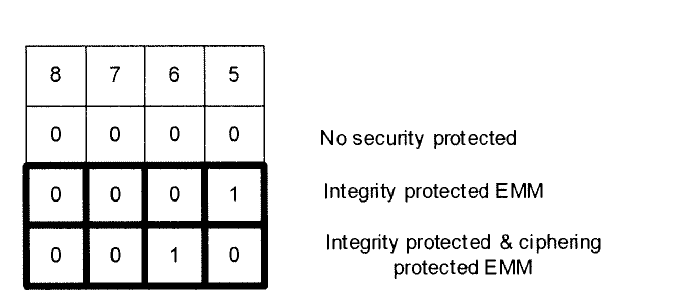

### Message 8: security header type for EMM message according to an embodiment

In case that PDE is not use, the protected ESM message identifier should be discriminated from the EPS bearer identifier and security header type as shown in tables 9 to 11.

In table 9, the 5^{th}, 6^{th}, 7^{th}, and 8^{th} bits of 1 octet are used as the EPS security header type and EPS bearer identifier. The value 0000 indicates non EPS bearer identity allocation, and the values 0101 to 1111 are used to identify the EPS bearers.

The values 0001 to 1011 can be reserved for future use or used to indicate EPS security header type. Detailed description is made with reference to tables 10 and 11.

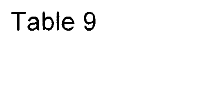

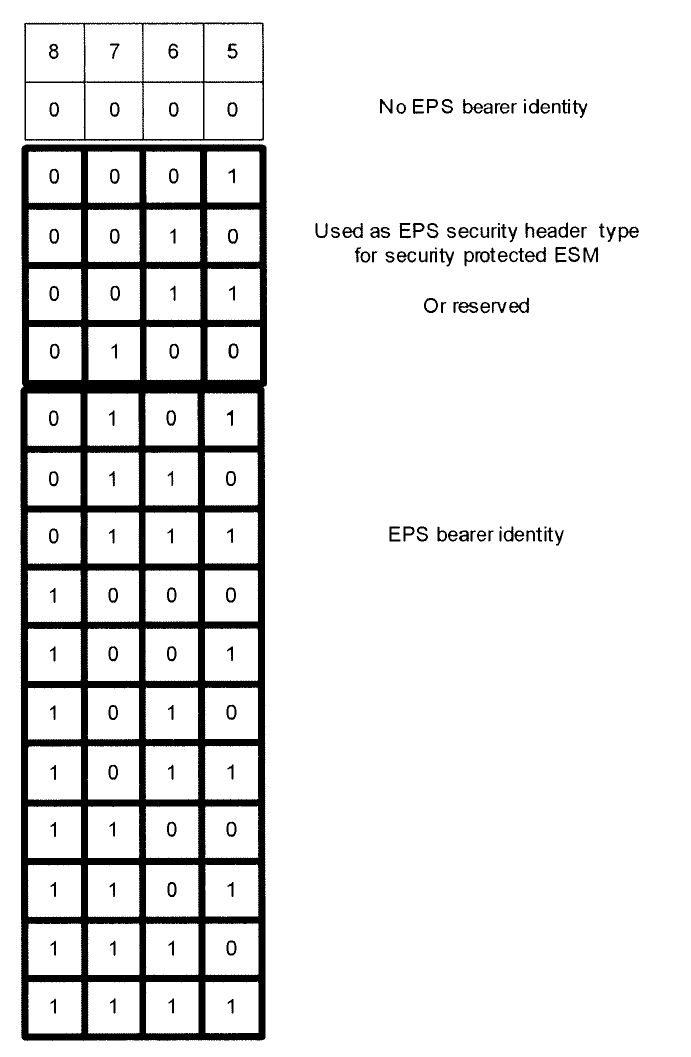

### Message 9: security header type and bearer identity for ESM message according to an embodiment

In table 10, the 5^{th}, 6^{th}, 7^{th}, and 8^{th} bits of 1 octet are used to indicate the security header type, i.e., the value 0000 for indicating non-security protected or no procedure allocated to the UE and the value 0001 for indicating a security protected ESM message.

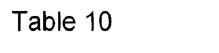

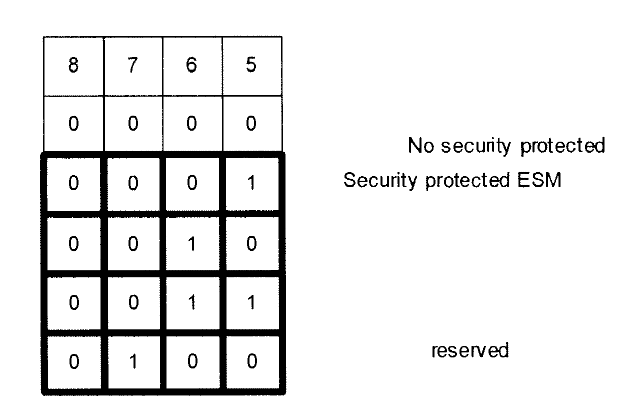

### Message 10: security header type for ESM message according to an embodiment

Table 11 shows a part of table 9 that is used for different purposes. That is, 5^{th}, 6^{th}, 7^{th}, and 8^{th} bits of octet 1 are used as the security header type, i.e., the value 0000 for the non-security protected or no procedure allocated to the UE, the value 0001 for the integrity protected ESM message, and the value 0010 for the integrity and ciphering protected ESM message.

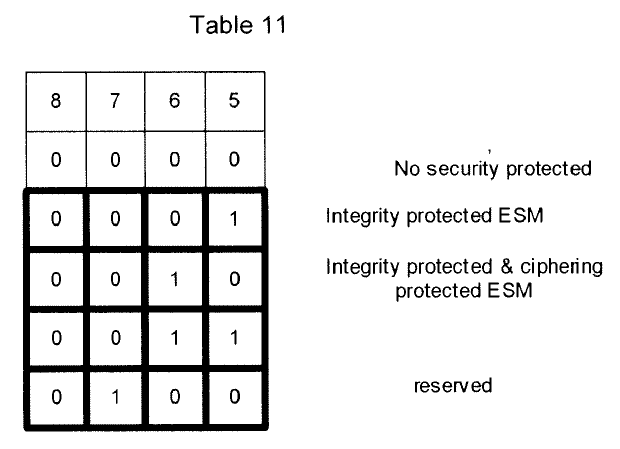

### Message 11: security header type for ESM message according to an embodiment

Although exemplary embodiments of the present invention have been described in detail hereinabove, it should be clearly understood that many variations and/or modifications of the basic inventive concepts herein taught which may appear to those skilled in the present art will still fall within the scope of the present invention, as defined in the appended claims.

The embodiments disclosed in the specification and drawings aim only to help understand but not limit the present invention. Meanwhile, persons ordinarily skilled in the art would make modifications in terms of specific embodiments and application scopes without departing from the concepts of the present invention.

## Claims

1. A method for processing a message in a wireless communication network, the method comprising:
generating, at a first apparatus, a message comprising protocol discriminator information and one of security header type information and Evolved Packet System, EPS, bearer identity, wherein the protocol discriminator information indicates one of an evolved packet system, EPS, mobility management, EMM, message, an evolved session management, ESM, message and a protocol discriminator extension; and
transmitting the message to a second apparatus,
wherein when the protocol discriminator information indicates one of an evolved packet system, EPS, mobility management, EMM, or an evolved session management, ESM, message, the protocol discriminator information uses bits coded as 0010 to indicate an ESM message and uses bits coded as 0111 to indicate an EMM, message,
wherein when the protocol discriminator information indicates an EMM message, the security header type information uses (335) bits coded as 0000 to indicate that the message is not security protected, uses (333) bits coded as 0001 to indicate an integrity protected message, uses (331) bits coded as 0010 to indicate an integrity protected and ciphered message, and uses bits coded as 1100 to indicate a service request message,
wherein when the protocol discriminator information indicates an ESM message, bits 5 to 8 of a first octet of the message indicate the EPS bearer identity, the bits 5 to 8 of the first octet of the message are coded as 0000 to indicate that no EPS bearer identity is assigned, and the bits 5 to 8 of the first octet of the message are coded as 0101 to 1111 to indicate an EPS bearer identity value,
wherein when the protocol discriminator information indicates an EMM message, bits 1 to 4 of a first octet of the message contain the protocol discriminator information and the bits 5 to 8 of the first octet of the message contain the security header type information, and
wherein when the protocol discriminator indicates a protocol discriminator extension, the bits 1 to 4 of the first octet of the message contain the protocol discriminator information and the bits 5 to 8 of the first octet of the message contain protocol discriminator extension information,
wherein the first apparatus is a mobile station (110) and the second apparatus is a Mobility Management Entity, MME, (114) or wherein the first apparatus is a Mobility Management Entity, MME, (114) and the second apparatus is a mobile station (110).

2. The method of claim 1, wherein the message is a Non-Access Stratum, NAS, protocol message.

3. The method of claim 1, wherein the EPS bearer identity uses bits coded as 0001 to 0100 to indicate a space reserved for future use.

4. The method of claim 1, wherein the protocol discriminator information indicates a protocol discriminator extension and the protocol discriminator extension information indicates an EMM message, the security header type information uses bits coded as 0100 to indicate the integrity protected message, uses bits coded as 0110 to indicate the integrity protected and ciphered message, uses bits coded as 1100 to indicate service request, and uses bits coded as 1000 to indicate protected message.

5. The method of claim 1, wherein when the protocol discriminator information indicates a protocol discriminator extension and the protocol discriminator extension information indicates an ESM message, the security header type information uses bits coded as 0010 to indicate the integrity protected message, uses bits coded as 0101 to indicate the integrity protected and ciphered message, and uses bits coded as 0111 to indicate no protected message.

6. An apparatus for processing a message in a wireless communication network, the apparatus comprising:
a transceiver for transmitting and receiving a signal;
a controller configured to generate a message comprising protocol discriminator information and one of security header type information and protocol discriminator extension, and to transmit the message to a second apparatus, wherein the protocol discriminator information indicates one of an evolved packet system, EPS, mobility management, EMM, message, an evolved session management, ESM, message and a protocol discriminator extension,
wherein when the protocol discriminator information indicates one of an EMM message, or an ESM message, the protocol discriminator information uses bits coded as 0010 to indicate an ESM message and uses bits coded as 0111 to indicate an EMM message,
wherein when the protocol discriminator information indicates an EMM message, the security header type information uses bits coded as 0000 to indicate that the message is not security protected, uses bits coded as 0001 to indicate an integrity protected message, uses bits coded as 0010 to indicate an integrity protected and ciphered message, and uses bits coded as 1100 to indicate a service request message,
wherein when the protocol discriminator information indicates an ESM message, bits 5 to 8 of a first octet of the message indicate the EPS bearer identity, the bits 5 to 8 of the first octet of the message are coded as 0000 to indicate that no EPS bearer identity is assigned, and the bits 5 to 8 of the first octet of the message are coded as 0101 to 1111 to indicate an EPS bearer identity value,
wherein when the protocol discriminator information indicates an EMM message, bits 1 to 4 of a first octet of the message contain the protocol discriminator information and bits 5 to 8 of the first octet of the message contain the security header type information, and
wherein when the protocol discriminator indicates a protocol discriminator extension, the bits 1 to 4 of the first octet of the message contain the protocol discriminator information and the bits 5 to 8 of the first octet of the message contain protocol discriminator extension information,
wherein the apparatus is a mobile station (110) and the second apparatus is a Mobility Management Entity, MME, (114) or wherein the apparatus is a Mobility Management Entity, MME, (114) and the second apparatus is a mobile station (110).

7. The apparatus of claim 6, wherein the message is a Non-Access Stratum, NAS, protocol message.

8. The apparatus of claim 6, wherein the EPS bearer identity uses bits coded as 0001 to 0100 to indicate a space reserved for future use.

9. The apparatus of claim 6, wherein the protocol discriminator information indicates a protocol discriminator extension and the protocol discriminator extension information indicates an EMM message, the security header type information uses bits coded as 0100 to indicate the integrity protected message, uses bits coded as 0110 to indicate the integrity protected and ciphered message, uses bits coded as 1100 to indicate service request, and uses bits coded as 1000 to indicate protected message.

10. The apparatus of claim 6, wherein when the protocol discriminator information indicates a protocol discriminator extension and the protocol discriminator extension information indicates an ESM message, the security header type information uses bits coded as 0010 to indicate the integrity protected message, uses bits coded as 0101 to indicate the integrity protected and ciphered message, and uses bits coded as 0111 to indicate no protected message.

## Patentansprüche

1. Verfahren zum Verarbeiten einer Nachricht in einem drahtlosen Kommunikationsnetzwerk, wobei das Verfahren umfasst:
Erzeugen, an einer ersten Vorrichtung, einer Nachricht, die Protokolldiskriminatorinformationen und entweder Sicherheits-Headertyp Informationen oder eine evolvierte Paketsystem, EPS, Trägeridentität umfasst, wobei die Protokolldiskriminatorinformationen entweder eine evolvierte Paketsystem, EPS, Mobilitätsmanagement, EMM, Nachricht, eine evolvierte Sessionmanagement, ESM, Nachricht oder eine Protokolldiskriminator-Erweiterung anzeigen; und
Übertragen der Nachricht an eine zweite Vorrichtung,
wobei, wenn die Protokolldiskriminatorinformationen eine von einer evozierten Paketsystem, EPS, Mobilitätsmanagement, EMM, Nachricht oder einer evolvierten Sessionmanagement, ESM, Nachricht anzeigen, die Protokolldiskriminatorinformationen Bits verwenden, die als 0010 kodiert sind, um eine ESM-Nachricht anzuzeigen, und Bits verwenden, die als 0111 kodiert sind, um eine EMM-Nachricht anzuzeigen,
wobei, wenn die Protokolldiskriminatorinformationen eine EMM-Nachricht anzeigen, die Sicherheits-Headertyp Informationen Bits (335) verwenden, die als 0000 kodiert sind, um anzuzeigen, dass die Nachricht nicht sicherheitsgeschützt ist, Bits (333) verwenden, die als 0001 kodiert sind, um eine integritätsgeschützte Nachricht anzuzeigen, Bits (331) verwenden, die als 0010 kodiert sind, um eine integritätsgeschützte und verschlüsselte Nachricht anzuzeigen, und Bits verwenden, die als 1100 kodiert sind, um eine Serviceanforderungsnachricht anzuzeigen,
wobei, wenn die Protokolldiskriminatorinformationen eine ESM-Nachricht anzeigen, Bits 5 bis 8 eines ersten Oktetts der Nachricht die EPS-Trägeridentität anzeigen, die Bits 5 bis 8 des ersten Oktetts der Nachricht als 0000 kodiert sind, um anzuzeigen, dass keine EPS-Trägeridentität zugewiesen ist, und die Bits 5 bis 8 des ersten Oktetts der Nachricht als 0101 bis 1111 kodiert sind, um einen EPS-Trägeridentitätswert anzuzeigen,
wobei, wenn die Protokolldiskriminatorinformationen eine EMM-Nachricht anzeigen, Bits 1 bis 4 eines ersten Oktetts der Nachricht die Protokolldiskriminatorinformationen enthalten und die Bits 5 bis 8 des ersten Oktetts der Nachricht die Sicherheits-Headertyp Informationen enthalten, und
wobei, wenn der Protokolldiskriminator eine Protokolldiskriminator-Erweiterung anzeigt, die Bits 1 bis 4 des ersten Oktetts der Nachricht die Protokolldiskriminatorinformationen enthalten und die Bits 5 bis 8 des ersten Oktetts der Nachricht Protokolldiskriminator-Erweiterungsinformationen enthalten,
wobei die erste Vorrichtung eine Mobilstation (110) ist und die zweite Vorrichtung eine Mobilitäts-Management-Einheit, MME, (114) ist, oder wobei die erste Vorrichtung eine Mobilitäts-Management-Einheit, MME, (114) ist und die zweite Vorrichtung eine Mobilstation (110) ist.

2. Verfahren nach Anspruch 1, wobei die Nachricht eine Non-Access-Stratum-, NAS, Protokollnachricht ist.

3. Verfahren nach Anspruch 1, wobei die EPS-Trägeridentität Bits verwendet, die als 0001 bis 0100 kodiert sind, um einen für die zukünftige Verwendung reservierten Bereich anzuzeigen.

4. Verfahren nach Anspruch 1, wobei die Protokolldiskriminatorinformationen eine Protokolldiskriminator-Erweiterung anzeigen und die Protokolldiskriminator-Erweiterungsinformationen eine EMM-Nachricht anzeigen, die Sicherheits-Headertyp Informationen Bits verwenden, die als 0100 kodiert sind, um die integritätsgeschützte Nachricht anzuzeigen, Bits verwenden, die als 0110 kodiert sind, um die integritätsgeschützte und verschlüsselte Nachricht anzuzeigen, Bits verwenden, die als 1100 kodiert sind, um die Serviceanforderung anzuzeigen, und Bits verwenden, die als 1000 kodiert sind, um die geschützte Nachricht anzuzeigen.

5. Verfahren nach Anspruch 1, wobei, wenn die Protokolldiskriminatorinformationen eine Protokolldiskriminator-Erweiterung anzeigen und die Protokolldiskriminator-Erweiterungsinformationen eine ESM-Nachricht anzeigen, die Sicherheits-Headertyp Informationen Bits verwenden, die als 0010 kodiert sind, um die integritätsgeschützte Nachricht anzuzeigen, Bits verwenden, die als 0101 kodiert sind, um die integritätsgeschützte und verschlüsselte Nachricht anzuzeigen, und Bits verwenden, die als 0111 kodiert sind, um eine nicht geschützte Nachricht anzuzeigen.

6. Vorrichtung zum Verarbeiten einer Nachricht in einem drahtlosen Kommunikationsnetzwerk, wobei die Vorrichtung umfasst:
einen Transceiver zum Übertragen und Empfangen eines Signals;
ein Steuergerät, das konfiguriert ist, um eine Nachricht zu erzeugen, die Protokolldiskriminatorinformationen und entweder Sicherheits-Headertyp Informationen oder eine Protokolldiskriminator-Erweiterung umfasst, und um die Nachricht zu einer zweiten Vorrichtung zu übertragen, wobei die Protokolldiskriminatorinformationen entweder eine evolviertes Paketsystem, EPS, Mobilitätsmanagement, EMM, Nachricht, eine evolvierte Sessionmanagement, ESM, Nachricht oder eine Protokolldiskriminator-Erweiterung anzeigen,
wobei, wenn die Protokolldiskriminatorinformationen eine EMM-Nachricht oder eine ESM-Nachricht anzeigen, die Protokolldiskriminatorinformationen Bits verwenden, die als 0010 kodiert sind, um eine ESM-Nachricht anzuzeigen, und Bits verwenden, die als 0111 kodiert sind, um eine EMM-Nachricht anzuzeigen,
wobei, wenn die Protokolldiskriminatorinformationen eine EMM-Nachricht anzeigen, die Informationen vom Sicherheits-Headertyp Bits verwenden, die als 0000 kodiert sind, um anzuzeigen, dass die Nachricht nicht sicherheitsgeschützt ist, Bits verwenden, die als 0001 kodiert sind, um eine integritätsgeschützte Nachricht anzuzeigen, Bits verwenden, die als 0010 kodiert sind, um eine integritätsgeschützte und verschlüsselte Nachricht anzuzeigen, und Bits verwenden, die als 1100 kodiert sind, um eine Serviceanforderungsnachricht anzuzeigen,
wobei, wenn die Protokolldiskriminatorinformationen eine ESM-Nachricht anzeigen, Bits 5 bis 8 eines ersten Oktetts der Nachricht die EPS-Trägeridentität anzeigen, die Bits 5 bis 8 des ersten Oktetts der Nachricht als 0000 kodiert sind, um anzuzeigen, dass keine EPS-Trägeridentität zugewiesen ist, und die Bits 5 bis 8 des ersten Oktetts der Nachricht als 0101 bis 1111 kodiert sind, um einen EPS-Trägeridentitätswert anzuzeigen,
wobei, wenn die Protokolldiskriminatorinformationen eine EMM-Nachricht anzeigen, Bits 1 bis 4 eines ersten Oktetts der Nachricht die Protokolldiskriminatorinformationen enthalten und Bits 5 bis 8 des ersten Oktetts der Nachricht die Sicherheits-Headertyp Informationen enthalten, und
wobei, wenn der Protokolldiskriminator eine Protokolldiskriminator-Erweiterung anzeigt, die Bits 1 bis 4 des ersten Oktetts der Nachricht die Protokolldiskriminatorinformationen enthalten und die Bits 5 bis 8 des ersten Oktetts der Nachricht Protokolldiskriminator-Erweiterungsinformationen enthalten,
wobei die Vorrichtung eine Mobilstation (110) ist und die zweite Vorrichtung eine Mobilitäts-Management-Einheit, MME, (114) ist, oder wobei die Vorrichtung eine Mobilitäts-Management-Einheit, MME, (114) ist und die zweite Vorrichtung eine Mobilstation (110) ist.

7. Vorrichtung nach Anspruch 6, wobei die Nachricht eine Non-Access-Stratum-, NAS, Protokollnachricht ist.

8. Vorrichtung nach Anspruch 6, wobei die EPS-Trägeridentität Bits verwendet, die als 0001 bis 0100 kodiert sind, um einen für die zukünftige Verwendung reservierten Bereich anzuzeigen.

9. Vorrichtung nach Anspruch 6, wobei die Protokolldiskriminatorinformationen eine Protokolldiskriminator-Erweiterung anzeigen und die Protokolldiskriminator-Erweiterungsinformationen eine EMM-Nachricht anzeigen, die Sicherheits-Headertyp Informationen Bits verwenden, die als 0100 kodiert sind, um die integritätsgeschützte Nachricht anzuzeigen, Bits verwenden, die als 0110 kodiert sind, um die integritätsgeschützte und verschlüsselte Nachricht anzuzeigen, Bits verwenden, die als 1100 kodiert sind, um die Serviceanforderung anzuzeigen, und Bits verwenden, die als 1000 kodiert sind, um die geschützte Nachricht anzuzeigen.

10. Vorrichtung nach Anspruch 6, wobei, wenn die Protokolldiskriminatorinformationen eine Protokolldiskriminator-Erweiterung anzeigen und die Protokolldiskriminator-Erweiterungsinformationen eine ESM-Nachricht anzeigen, die Sicherheits-Headertyp Informationen Bits verwenden, die als 0010 kodiert sind, um die integritätsgeschützte Nachricht anzuzeigen, Bits verwenden, die als 0101 kodiert sind, um die integritätsgeschützte und verschlüsselte Nachricht anzuzeigen, und Bits verwenden, die als 0111 kodiert sind, um eine nicht geschützte Nachricht anzuzeigen.

## Revendications

1. Procédé de traitement d'un message dans un réseau de communications sans fil, le procédé comprenant :
la génération, au niveau d'un premier appareil, d'un message comprenant des informations de discriminateur de protocole et l'une des informations de type d'en-tête de sécurité et d'identité de porteur de système de paquets évolué, EPS, dans lequel les informations de discriminateur de protocole indiquent l'une des informations suivantes: un message de système de paquets évolué, EPS, de gestion de la mobilité, EMM, de gestion de session évolué, ESM, et une extension de discriminateur de protocole ; et
la transmission du message à un second appareil,
dans lequel, lorsque les informations de discrimination de protocole indiquent un message de système de paquets évolué, EPS, de gestion de la mobilité, EMM, ou de gestion de session évoluée, ESM, les informations de discrimination de protocole utilisent des bits codés en 0010 pour indiquer un message ESM et utilisent des bits codés en 0111 pour indiquer un message EMM,
dans lequel, lorsque les informations de discrimination de protocole indiquent un message EMM, les informations de type d'en-tête de sécurité utilisent (335) bits codés en 0000 pour indiquer que le message n'est pas protégé par la sécurité, utilisent (333) bits codés en 0001 pour indiquer un message protégé par l'intégrité, utilisent (331) bits codés en 0010 pour indiquer un message protégé par l'intégrité et chiffré, et utilisent des bits codés en 1100 pour indiquer un message de demande de service,
dans lequel, lorsque les informations de discrimination de protocole indiquent un message ESM, les bits 5 à 8 d'un premier octet du message indiquent l'identité du porteur EPS, les bits 5 à 8 du premier octet du message sont codés comme 0000 pour indiquer qu'aucune identité de porteur EPS n'est attribuée, et les bits 5 à 8 du premier octet du message sont codés comme 0101 à 1111 pour indiquer une valeur d'identité de porteur EPS,
dans lequel, lorsque les informations de discrimination de protocole indiquent un message EMM, les bits 1 à 4 d'un premier octet du message contiennent les informations de discrimination de protocole et
les bits 5 à 8 du premier octet du message contiennent les informations de type d'en-tête de sécurité, et
dans lequel, lorsque le discriminateur de protocole indique une extension de discriminateur de protocole, les bits 1 à 4 du premier octet du message contiennent l'information du discriminateur de protocole et
les bits 5 à 8 du premier octet du message contiennent des informations sur l'extension du discriminateur de protocole,
dans lequel le premier appareil est une station mobile (110) et le second appareil est une entité de gestion de la mobilité, MME, (114) ou dans lequel le premier appareil est une entité de gestion de la mobilité, MME, (114) et le second appareil est une station mobile (110).

2. Procédé selon la revendication 1, dans lequel le message est un message de protocole NAS (Non-Access Stratum).

3. Procédé selon la revendication 1, dans lequel l'identité du porteur de l'EPS utilise des bits codés de 0001 à 0100 pour indiquer un espace réservé pour une utilisation future.

4. Procédé selon la revendication 1, dans lequel les informations de discriminateur de protocole indiquent une extension de discriminateur de protocole et les informations d'extension de discriminateur de protocole indiquent un message EMM, les informations de type d'en-tête de sécurité utilisent des bits codés en 0100 pour indiquer le message à intégrité protégée, utilisent des bits codés en 0110 pour indiquer le message à intégrité protégée et chiffré, utilisent des bits codés en 1100 pour indiquer une demande de service, et utilisent des bits codés en 1000 pour indiquer un message protégé.

5. Procédé selon la revendication 1, dans lequel lorsque les informations de discriminateur de protocole indiquent une extension de discriminateur de protocole et que les informations d'extension de discriminateur de protocole indiquent un message ESM, les informations de type d'en-tête de sécurité utilisent des bits codés en 0010 pour indiquer le message protégé en termes d'intégrité, utilisent des bits codés en 0101 pour indiquer le message protégé en termes d'intégrité et chiffré, et utilisent des bits codés en 0111 pour indiquer qu'il n'y a pas de message protégé.

6. Appareil pour traiter un message dans un réseau de communication sans fil, l'appareil comprenant :
un émetteur-récepteur pour transmettre et recevoir un signal;
un dispositif de commande configuré pour générer un message comprenant des informations de discriminateur de protocole et l'une des informations de type d'en-tête de sécurité et d'extension de discriminateur de protocole, et pour transmettre le message à un second appareil, dans lequel les informations de discriminateur de protocole indiquent l'une des informations suivantes : un message de système de paquets évolué, EPS, gestion de la mobilité, EMM, de gestion de session évoluée, ESM et une extension de discriminateur de protocole,
dans lequel, lorsque les informations de discrimination de protocole indiquent un message EMM ou un message ESM, les informations de discrimination de protocole utilisent des bits codés 0010 pour indiquer un message ESM et des bits codés 0111 pour indiquer un message EMM,
dans lequel, lorsque les informations de discrimination de protocole indiquent un message EMM, les informations de type d'en-tête de sécurité utilisent des bits codés en 0000 pour indiquer que le message n'est pas protégé par la sécurité, utilisent des bits codés en 0001 pour indiquer un message protégé par l'intégrité, utilisent des bits codés en 0010 pour indiquer un message protégé par l'intégrité et chiffré, et utilisent des bits codés en 1100 pour indiquer un message de demande de service,
dans lequel, lorsque les informations de discrimination de protocole indiquent un message ESM, les bits 5 à 8 d'un premier octet du message indiquent l'identité du porteur EPS, les bits 5 à 8 du premier octet du message sont codés comme 0000 pour indiquer qu'aucune identité de porteur EPS n'est attribuée, et les bits 5 à 8 du premier octet du message sont codés comme 0101 à 1111 pour indiquer une valeur d'identité de porteur EPS,
dans lequel, lorsque les informations de discrimination de protocole indiquent un message EMM, les bits 1 à 4 du premier octet du message contiennent les informations de discrimination de protocole et les bits 5 à 8 du premier octet du message contiennent les informations de type d'en-tête de sécurité, et
dans lequel, lorsque le discriminateur de protocole indique une extension de discriminateur de protocole, les bits 1 à 4 du premier octet du message contiennent l'information de discriminateur de protocole et les bits 5 à 8 du premier octet du message contiennent l'information d'extension de discriminateur de protocole,
dans lequel l'appareil est une station mobile (110) et le second appareil est une entité de gestion de la mobilité, MME, (114) ou dans lequel l'appareil est une entité de gestion de la mobilité, MME, (114) et le second appareil est une station mobile (110).

7. Appareil selon la revendication 6, dans lequel le message est un message de protocole NAS (Non-Access Stratum).

8. Appareil selon la revendication 6, dans lequel l'identité du porteur EPS utilise des bits codés de 0001 à 0100 pour indiquer un espace réservé pour une utilisation future.

9. Appareil selon la revendication 6, dans lequel l'information de discriminateur de protocole indique une extension de discriminateur de protocole et l'information d'extension de discriminateur de protocole indique un message EMM, l'information de type d'en-tête de sécurité utilise des bits codés en 0100 pour indiquer le message à intégrité protégée, utilise des bits codés en 0110 pour indiquer le message codé et protégé par intégrité, utilise des bits codés en 1100 pour indiquer une demande de service, et utilise des bits codés en 1000 pour indiquer un message protégé.

10. Appareil selon la revendication 6, dans lequel, lorsque les informations de discriminateur de protocole indiquent une extension de discriminateur de protocole et que les informations d'extension de discriminateur de protocole indiquent un message ESM, les informations de type d'en-tête de sécurité utilisent des bits codés en 0010 pour indiquer le message protégé en termes d'intégrité, utilisent des bits codés en 0101 pour indiquer le message protégé en termes d'intégrité et chiffré, et utilisent des bits codés en 0111 pour indiquer qu'il n'y a pas de message protégé.
